# FASCICULE DE BREVET EUROPEEN

(11) **EP 3 095 716 B1**
(45) Date de publication et mention de la délivrance du brevet: **25.12.2019**
(21) Numéro de dépôt: 16169666.1
(22) Date de dépôt: 13.05.2016
(51) Int. Cl.: B64G 5/00, F16L 55/00

(54) **MODULE DE RACCORDEMENT D'AVITAILLEMENT POUR LANCEUR SPATIAL**
VERSORGUNGS-ANSCHLUSSMODUL FÜR TRÄGERRAKETE
REFUELLING CONNECTION MODULE FOR SPACE LAUNCHER

(30) Priorité: 18.05.2015 BE 201505305
(43) Date de publication de la demande: 23.11.2016
(73) Titulaire: Safran Aero Boosters SA, 4041 Herstal (BE)
(72) Inventeur: DELCOMMUNE, Julien, 4050 Chaudfontaine (BE)
(74) Mandataire: Lecomte & Partners

(56) Documents cités:
- WO-A1-2016/083713
- FR-A1- 2 639 610
- FR-A1- 2 943 627

## Description

### Domaine technique

L'invention porte sur un module de raccordement pour l'avitaillement d'un lanceur. Plus précisément, l'invention concerne un module de raccordement pour l'avitaillement de lanceur avec une pièce de liaison mécanique. L'invention traite également d'une méthode pour scinder une pièce de liaison de module de raccordement pour l'avitaillement pour lanceur.

### Technique antérieure

Le moteur d'un lanceur spatial utilise généralement de l'ergol liquide pour sa propulsion. Ce carburant cryogénique est stocké dans un réservoir relié aux installations du pas de tir jusqu'au décollage. L'alimentation s'effectue à l'aide d'un dispositif d'accouplement et de déconnexion muni de plusieurs canalisations pour l'écoulement du carburant, du comburant et d'autres fluides tels que les gaz de commande. Ces liaisons entre autres permettent bien entendu le remplissage de réservoirs, une vidange, l'alimentation des organes de commande, l'assainissement du lanceur. En effet, certains scénarios d'annulation de tir imposent de vider un réservoir car le carburant présente un caractère instable.

La liaison est solidaire d'une platine sol et d'une platine vol du dispositif. Elle se scinde en deux portions qui restent accrochées soit à la platine sol soit à la platine vol. Sa division par rupture est provoquée par un mécanisme exerçant un effort de traction axiale.

Le document FR2639610 A1 divulgue un dispositif de remplissage des propulseurs cryogéniques d'un lanceur, le dispositif se séparant automatiquement lors du décollage du lanceur. Le dispositif comprend une canalisation embarquée et une canalisation au sol. Celle-ci comporte un tube montrant une zone fragilisée sur laquelle prennent appui des jambes de force. Lors du décollage du lanceur, un manchon actionne les jambes de force vers le tube. Elles exercent alors un effort de traction axiale sur le tube provoquant la rupture de la zone fragilisée. Le tube se retrouve scindé en deux parties, chacune restant solidaire de la partie sol ou de la partie embarquée du dispositif. Un tel dispositif permet un remplissage du lanceur jusqu'au dernier moment du décollage. Cependant, la fiabilité de la rupture reste limitée malgré un mécanisme complexe. L'état de la technique comprend également le document WO 2016/083713 A1 dans le sens de l'article 54(3) CBE.

### Résumé de l'invention

### Problème technique

L'invention a pour objectif de résoudre au moins un des problèmes posés par l'art antérieur. Plus précisément, l'invention a pour objectif d'améliorer la fiabilité d'un module de raccordement pour l'avitaillement d'un lanceur. L'invention a également pour objectif de diminuer le coût d'un module de raccordement pour avitaillement.

### Solution technique

On aura bien compris que l'invention a pour objet une liaison de raccordement hydraulique haute pression, notamment une liaison de raccordement de la partie sol et de la partie vol d'un module de raccordement pour l'avitaillement de lanceur, la liaison comprenant trois portions ; dont une deuxième portion qui est reliée à la première portion et à la troisième portion, à l'aide d'une première jonction jointe à la première portion, et à l'aide d'une deuxième jonction jointe à la troisième portion.

Selon un mode avantageux de l'invention, la première portion et/ou la deuxième portion comprend une surface externe avec des motifs configurés pour transmettre un couple de torsion axiale à la liaison, éventuellement chaque surface externe est hexagonale.

Selon l'invention, la première jonction est une gorge circulaire et/ou une amorce de rupture, d'une longueur axiale inférieure à 10,00 mm, préférentiellement inférieure ou égale à 5,00 mm.

Selon un mode avantageux de l'invention, la première jonction comprend au moins un épaulement, et/ou la deuxième jonction comprend au moins une zone avec une variation progressive de diamètre.

Selon l'invention, la deuxième jonction est au moins dix fois plus longue axialement que la première jonction, préférentiellement au moins vingt fois plus longue.

Selon un mode avantageux de l'invention, la liaison est formée par une paroi annulaire qui est moins épaisse au niveau de la deuxième jonction qu'au niveau de la première jonction.

Selon un mode avantageux de l'invention, la liaison est monobloc et éventuellement venue de matière.

L'invention a également pour objet un module de raccordement pour l'avitaillement de lanceur, notamment de propulseur de lanceur spatial, le module comprenant : une partie vol destinée à être fixée sur le lanceur ; une partie sol destinée à être placée à distance du lanceur; une liaison qui est jointe aux parties de sorte à les solidariser ; un passage traversant la partie sol, la partie vol, et la liaison ; et qui est destiné à permettre une communication entre une canalisation du lanceur et une canalisation du pas de tir tel un ombilical ; remarquable en ce que la liaison comprend des moyens de serrage configurés pour plaquer la partie sol et la partie vol l'une contre l'autre et pour contraindre mécaniquement la liaison .

Selon un mode avantageux de l'invention, la contrainte mécanique est une contrainte de traction axiale.

L'invention a également pour objet une méthode d'assemblage d'un module de raccordement pour l'avitaillement de lanceur, le module comprenant : une partie sol du côté du pas de tir du lanceur, la partie sol comprenant un orifice sol ; une partie vol solidaire du lanceur, la partie vol comprenant un orifice vol ; une liaison qui est jointe aux parties de sorte à les solidariser ; remarquable en ce que lors l'assemblage, la liaison est montée avec une précontrainte de traction de sorte à plaquer la partie sol et la partie vol l'une contre l'autre

Selon un mode avantageux de l'invention, lors de l'assemblage la liaison est insérée dans l'orifice vol et dans l'orifice sol.

Selon un mode avantageux de l'invention, le module comprend des moyens d'étanchéité entre la partie vol et la partie sol, lorsque la liaison est soumise à la contrainte, les moyens d'étanchéité sont comprimés, et éventuellement s'écrasent axialement. Les moyens d'étanchéité peuvent être un joint, telle une bague.

Selon un mode avantageux de l'invention, la méthode comprend une étape de réglage et/ou une étape de contrôle de la contrainte de traction de la liaison.

De manière générale, dans le cadre des revendications, les modes avantageux de chaque objet de l'invention sont également applicables aux autres objets de l'invention. Dans la mesure du possible et dans le cadre des revendications, chaque objet de l'invention est combinable aux autres objets de l'invention. Les méthodes peuvent être intégrées dans des procédés, par exemple en un procédé d'assemblage et/ou un procédé de séparation de module de raccordement lors du lancement du lanceur.

### Avantages apportés

Le module selon l'invention offre une fiabilité de séparation extrême. En effet, il repose sur un nombre d'éléments réduit, tout comme le nombre de pièces mobiles. Il peut économiser un actionneur puisque l'élévation propre du lanceur agit sur le levier grâce au câble, et provoque la rupture de la liaison.

Puisque la liaison forme la ligne haute pression en conservant une continuité de matière d'une platine à l'autre, et d'une face à l'autre du module, l'étanchéité est optimale. La liaison ou coupée au raz de la platine vol pour rester à fleur de sa surface externe. Ainsi, l'aspect protubérant de la portion vol de la liaison est limité, ce qui préserve l'aérodynamisme et évite qu'un équipement du pas de tir ne s'y raccroche.

La deuxième portion de la liaison, ou portion souple, assure plusieurs fonctions. Elle maintient les platines plaquées l'une contre l'autre, et permet une déformation élastique d'une partie de la liaison. Elle favorise l'étanchéité entre les passages aboutés du module, et peut simplifier leur conception.

Le module permet de maintenir une connexion fluide, et/ou mécanique, et/ou électrique, jusqu'au début du décollage, c'est-à-dire en temps positifs. En cas de tir avorté, les platines restent connectées et en communication fluidique.

L'invention permet de combiner un effort de traction et un effort de torsion au niveau de la liaison. Elle crée une synergie afin d'atteindre d'autant plus facilement la contrainte entrainant la rupture de la liaison. Ce résultat est permis grâce à des jonctions dédiées réagissant de manière spécifique à chacune de ces contraintes.

### Brève description des dessins

La figure 1 représente une base de lancement d'un lanceur selon l'invention.
La figure 2 illustre un module de raccordement pour l'avitaillement de lanceur selon l'invention.
La figure 3 esquisse une liaison de module de raccordement pour l'avitaillement selon l'invention.
La figure 4 montre une portion du module de raccordement pour l'avitaillement selon l'invention.

### Description des modes de réalisation

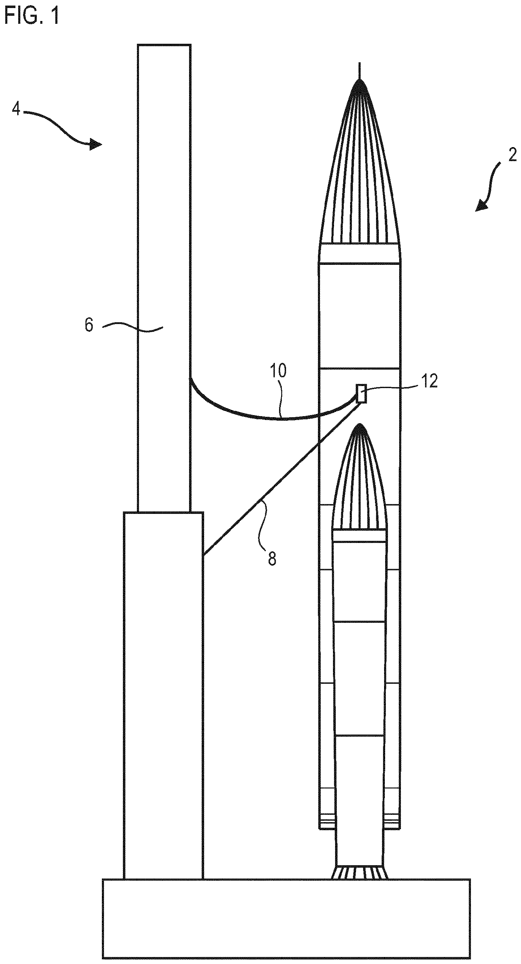

La figure 1 représente de manière simplifiée un lanceur spatial 2 prêt à décoller sur son pas de tir 4 ou base de lancement.

Le pas de tir 4 comprend optionnellement un mât vertical 6. Une série de câbles 8 et une pluralité d'ombilicaux d'alimentation 10 relient le lanceur 2 au mât 6. Les ombilicaux 10 forment des canalisations 10 permettant de remplir les réservoirs du lanceur 2 d'ergol, jusqu'au moment imminent du décollage. Les ombilicaux d'alimentation 10 et les câbles 8 sont reliés au lanceur 2 par l'intermédiaire d'un ou plusieurs module de raccordement 12 permettant une connexion puis une déconnexion automatique. L'état connecté est géré de manière autonome et est fonction de la cinématique du lanceur 2.

Un tel module 12 permet de raccorder le lanceur 2 au mât 6 en permettant une communication fluidique. La connexion reste effective jusqu'au moment du lancement, et éventuellement au début de l'élévation du lanceur 2. La connexion cesse lorsque le lanceur 2 s'élève au-delà d'une certaine valeur, par exemple lorsque l'altitude du lanceur atteint une valeur seuil S1. Un câble de déconnexion 8 relié au mât et au module peut déclencher la déconnexion, la division en deux parties du module 12.

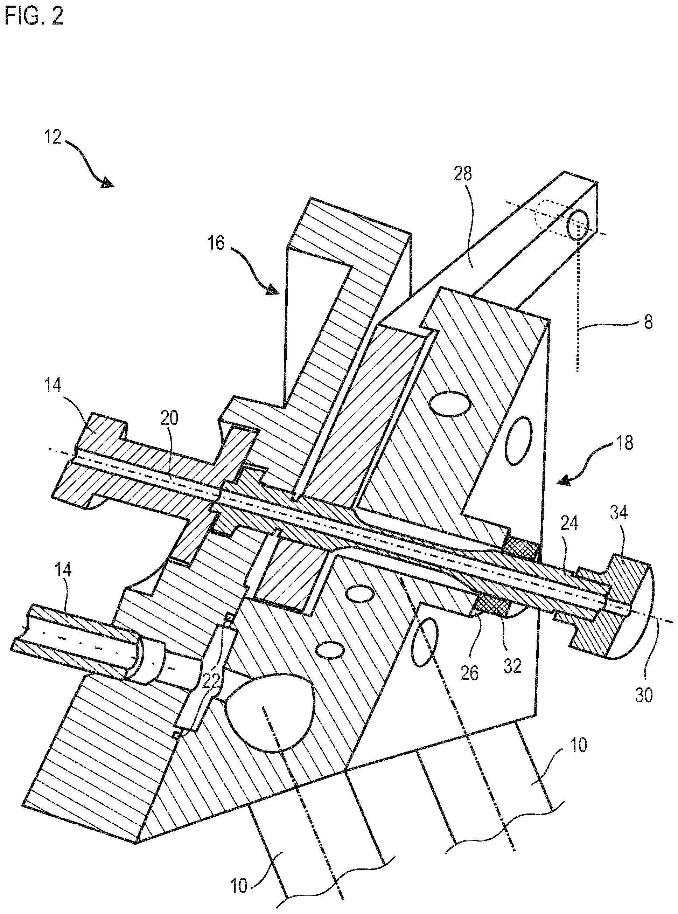

La figure 2 représente une vue en coupe d'un module de raccordement 12 pour l'avitaillement d'un lanceur tel que celui de la figure 1. Des conduites 14 du lanceur, des ombilicaux 10 sont représentés liés au module 12. Le câble de déconnexion 8 est représenté sous la forme d'un trait pointillé.

Le module 12 comprend deux parties, dont une partie vol 16 et une partie sol 18. Chaque partie est un élément, une entité. Les parties (16 ; 18) sont plaquées l'une sur l'autre. La partie sol 18 est du côté des ombilicaux 10 et y est jointe. La partie sol 18 est tournée vers l'exterieur du lanceur. La partie vol 16 est fixée, embarquée sur le lanceur. Après le décollage elle reste à bord. Elle est reliée aux canalisations 14 du lanceur, qui permettent par exemple le remplissage et/ou la vidange du/des réservoir(s) du lanceur.

Les parties (16 ; 18) peuvent être des platines, présentant chacune une face regardant la partie opposées. Les parties (16; 18) permettent la fixation de diverses connexions, c'est-à-dire la connexion d'alimentations. Elles peuvent généralement être des plaques, formant des corps, dont l'épaisseur est traversée par des passages, éventuellement coudés. Les parties (16 ; 18) sont fixées l'une à l'autre, elle présentent en outre des moyens pour reprendre des efforts de cisaillement à leur interface. Par exemple, des clavettes (non représentées) engagées dans des encoches correspondantes permettent de remplir cette fonction.

Les parties sol et vol comprenant éventuellement des moyens d'alimentation en correspondance. Par exemple un orifice peut être en correspondance d'un autre moyen tel une fiche, un orifice, un raccord ou tout autre moyen. Le module permet la connexion d'au moins un passage 20 de fluide, préférentiellement de plusieurs passages 20 de fluides d'une partie à l'autre. Chaque passage 20 communique avec une canalisation sol 10, telle un des ombilicaux 10 ; éventuelleme, le liaison 24 peut être ou comprendre une conduite permettant un passage 20 totalement optionnel selon l'invention. Chaque passage 20 traverse généralement le module de raccordement, et en particulier chaque partie (16 ; 18). Eventuellement un passage 20 relie deux faces distinctes d'une des parties 18. A l'interface des parties, le module peut comprendre des étanchéités 22, tels des joints toriques.

Les parties (16 ; 18) du module 12 sont reliées, préférentiellement fixées l'une à l'autre, grâce à une liaison 24 formant éventuellment un passage 20 du module 12. La liaison 24 peut comprendre des moyens de fixation, tels des moyens de serrage éventuellement réversibles, et/ou une surface de butée tel un épaulement. Les moyens de fixation peuvent chacun coopérer avec l'une des parties (16; 18), notamment en prenant appui dessus. En particulier la partie vol 16 peut comprendre une surface d'appui logée dans son épaisseur, et la partie sol 18 peut présenter une surface d'appui 26 déportée vers l'extérieur. Cette surface 26 peut être distante de l'enveloppe générale de la partie sol 18. Ce déport permet d'allonger axialement la liaison 24, ce qui a pour avantage d'augmenter son élasticité, sa souplesse.

Pour provoquer la rupture de la liaison 24, le module 12 comprend des moyens de torsion 28 de la liaison 24. Les moyens de torsion 28 doivent être solidaires de la liaison 24, notamment en rotation, par exemple grâce à des surfaces correspondantes. Ces surfaces peuvent être emmanchées l'une dans l'autre. Les moyens de torsion 28 peuvent être reliés au câble de déconnexion 8. Un guide câble (non représenté) peut être prévu de manière à orienter l'effort du câble 8 sur les moyens de déconnexion 8 selon une direction prédéterminée.

Ces moyens de torsion 28 permettent d'exercer un couple de torsion selon l'axe 30 d'allongement de la liaison 28, par exemple son axe central et/ou son axe principal. Les moyens de torsion 28 visent à faire pivoter deux portions de la liaison l'une par rapport à l'autre suivant l'axe. Le câble de déconnexion 8 tend à limiter l'altitude d'un point des moyens de torsion 28 en le retenant vers le bas. Ainsi, l'élévation du lanceur conjugée à une rétention des moyens de torsion 28 se traduit par une torsion axiale de la liaison 24 jusqu'à sa rupture.

Les moyens de torsion peuvent comprendre un disque sur lequel est enroulé le câble, et/ou un système d'engrenage. Un pignon peut être formé autour de la liaison . Le pignon peut être entraîné par le câble de déconnexion ou tout actionneur tel un moteur. Les moyens de torsion 28 peuvent être un levier 28, éventuellement avec une extrémité reliée à la liaison 24 de sorte à l'entraîner en rotation. L'autre extrémité de la liaison est reliée au câble de déconnexion 8. Lors du décollage, le levier 28 tend à basculer en exerçant un couple de torsion provoquant la rupture de la liaison 24. Cette dernière se divise, se partage, en réponse à un pivotement interne, un vrillage. Sa matière subit des efforts de cisaillement supérieurs à sa résistance mécanique, éventuellement impactés en raison des conditions cryogéniques. Puisque la liaison 24 est garante de ou participe à la cohésion des parties (16 ; 18) du module de raccordement, sa rupture permet la déconnexion du module, et en particulier la sépation des parties (16 ; 18). L'une 18 reste liée au pas de tir, éventuellement en retombant; l'autre 16 accompagne le lanceur. Des clapets (non représentés) peuvent permettre des fermetures automatiques, éventuellement simultanées, des canalisations (10 ; 14) sol et vol.

Lors de l'assemblage du module de raccordement 12, les parties (16 ; 18) sont plaquées l'une contre l'autre. Elles présentent des orifices traversants qui sont alignés et au travers desquels la liaison 24 est introduite. La liaison 24 peut généralement traverser le module 12. Elle est ensuite serrée pour l'immobiliser, de sorte à ce qu'elle forme un ensemble solidaire avec les parties (16 ; 18) et les moyens de torsion 28. Lors de l'assemblage, la liaison 24 peut devenir et rester contrainte en traction, de sorte à garder les parties (16 ; 18) plaquées l'une contre l'autre avec un effort de plaquage. Cette précontrainte limite les variations d'efforts qu'elle subit, et soigne le contact entre les parties (16 ; 18) malgré les effort de séparation subit par les parties tels que par exemples les vibrations, le poids des lignes ombilicales et la pression interne. Les étanchéités 22 auxquelles contribuent les parties sont préservées. La liaison 24 peut être fixée et contrainte à l'aide d'un écrou 32 serré, et d'un contre-écrou pour maintenir ce dernier. A l'extrémité libre côté sol, la liaison 24 peut comprendre un branchement 34, éventuellement avec un autre contre-écrou.

La canalisation 24 est apte à assurer seule la fixation des parties (16 ; 18) entre elles, tout comme leur plaquage. Toutefois, d'autres fixations, éventuellement auxiliaires, peuvent être prévues. Selon l'invention le module de raccordement 12 peut comprendre plusieurs liaison s 24 permettant de fixer les parties (16 ; 18) l'une à l'autres, différents passages 20 peuvent y traverser le module 12. Il est également envisagé que les moyens de torsion 28 agissent sur chaque fixation et/ou sur chaque liaison 24 des parties (16 ; 18). Les moyens 28 de torsion peuvent inclure différentes unités dédiées à chaque fixation et/ou à chaque liaison des parties.

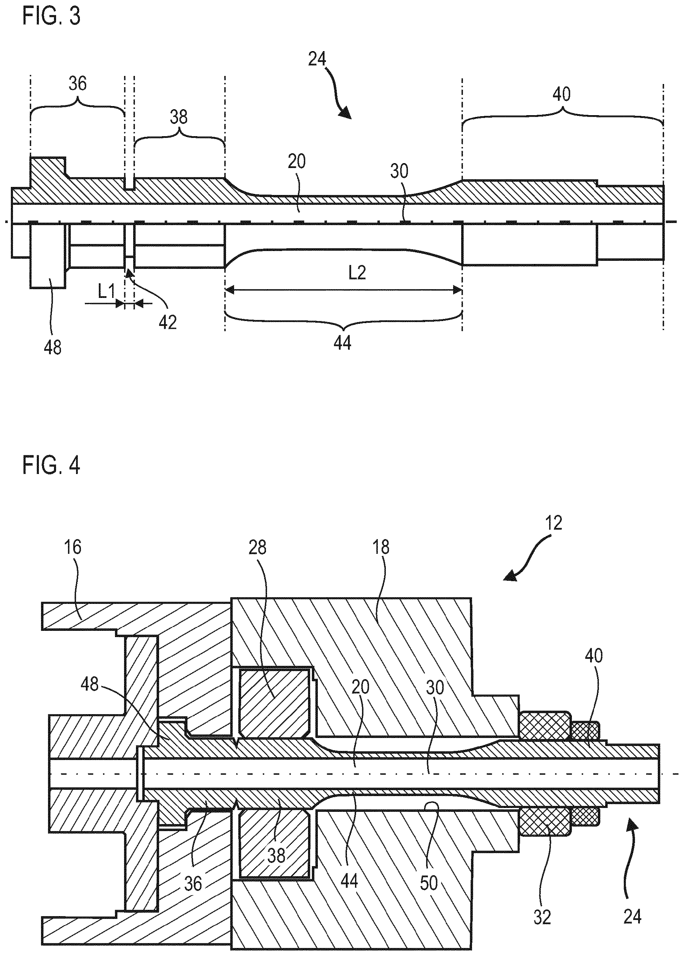

La figure 3 représente la liaison 24 du module de raccordement pour l'avitaillement. Une moitié supérieure est représentée en coupe, l'autre est illustrée latéralement. L'axe 30 de la liaison sépare ces moitiés.

La liaison 24 forme généralement une éprouvette avec une zone étranglée, rétrécie. Un passage 20 peut traverser la liaison 24 de part en part peut présenter un diamètre constant. La liaison 24 comprend une paroi qui entoure l'axe 30, et dont l'épaisseur varie, éventuellement axialement et/ou selon la circonférence. Elle est avantageusement réalisée en métal, et est préférentiellement monobloc et/ou venue de matière. Ces caractéristiques visent à garantir sa résistance mécanique en statique et en dynamique, tout comme son étanchéité malgré l'éventuelle présence de fluides agressifs. Le métal peut être un super-alliage comprenant du nickel et du chrome, par exemple pour bénéficier d'une tenacité élevée dans des conditions cryogéniques. Ainsi, la rupture de la liaison 24 est maîtrisée à la fois en cryogénique, à température ambiante, ou en condition chaude du pas de tir. L'homme du métier est encouragé à développer des matériaux adaptés à cette utilisation.

La liaison 24 comprend au moins deux portions, préférentiellement au moins trois portions (36 ; 38 ; 40). Les portions (36 ; 38 ; 40) sont en contact et/ou coopèrent avec les moyens de torsions et/ou au moins une ou chaque portion. Ces portions (36 ; 38 ; 40) peuvent être des portions principales, par exemple principales selon la largeur mesurée transversalement à l'axe 30.

De gauche à droite sur la figure, on observe une première portion 36, une deuxième portion 38, et une troisième portion 40. Ces portions (36 ; 38 ; 40) sont reliées à l'aide d'au moins une jonction (42 ; 44), préférentiellement plusieurs jonctions (42 ; 44). La deuxième portion 38 est reliée à la première portion 36 via la première jonction 42, et est reliée à la troisième portion 40 grâce à la deuxième jonction 44. Les jonctions (42 ; 44) peuvent matérialiser des réductions de largeur et/ou de diamètre sur la liaison 24.

Avantageusement, la première jonction 42 est une zone fragilisée, telle une zone liaison. Elle peut être une amorce de rupture, telle une entaille localisée, ou une gorge circulaire. Sa longueur axiale L1 est inférieure à 10% de la longueur du liaison. Plus sa longueur L1 est réduite, plus la contrainte en cisaillement est concentrée en cas de torsion, ce qui permet d'atteindre plus rapidement le seuil de rupture. La première jonction 42 peut comprendre au moins un épaulement, préférentiellement deux qui augmentent les concentrations de contraintes. La profondeur radiale de la première jonction 42 est supérieure à 1,00 mm, préférentiellement supérieure ou égale à 2,00 mm, éventuellement supérieure ou égale à 5 mm. Le fond de gorge peut avoir un profil circulaire ou en « V », ou en pointe, dont l'aspect aigu amplifie la concentration de contrainte La deuxième jonction 44 comprend au moins une, préférentiellement deux zones à variations progressives de diamètres, qui forment éventuellement des rayons de raccordement. La longueur axiale L2 de la deuxième jonction 44 peut être au moins vingt fois plus longue que la première jonction 42. Au niveau de la deuxième jonction 44, la paroi de la liaison 24 est plus mince qu'au niveau de la première jonction 42. Ces particularités concourent à rendre la première jonction 42 plus raide en torsion, et à rendre la deuxième jonction 44 plus souple. Ainsi, l'endroit où se produit la rupture en cas de torsion de la liaison est localisé avec précision. Il est plus aisé de sectionner la liaison 24 au niveau de la première jonction 42, au ras de la partie vol. La première jonction comprend une section avec un moment quadratique minimal ou moment d'inertie polaire, qui est le plus faible pour la première jonction. La deuxième jonction comprend une section avec un moment quadratique minimal, qui est le plus faible pour la deuxième jonction. Le premier moment quadratique est supérieur au deuxième moment quadratique. Les moments quadratiques sont selon l'axe 30, et/ou exprimés selon le centre de la section correspondante.

La troisième portion 40 comprend des moyens de serrage 46, et éventuellement des méplats. Elle peut comprendre une portée généralement tubulaire avec un pas de vis. Celui-là assure au moins deux fonctions, à savoir contrôler et régler la précontrainte axiale sur la liaison 24 lors de l'assemblage du module, et brancher une canalisation sol reliée au mât. A l'opposé de la troisième portion 40, la première portion 36 peut présenter ou être prolongée par une butée axiale, tel un épaulement 48 annulaire, qui permet un blocage axial.

La figure 4 représente une portion du module de raccordement 12 centrée sur la liaison 24.

Les surface externes de la première portion 36 et de la deuxième portion 38 de la liaison peuvent être en contact radial de la partie vol 16 et des moyens de torsion 28 respectivement. Ces surfaces externes peuvent comprendre des surfaces de blocage axial et/ou radial. La deuxième jonction 44 peut être séparée de la surface interne 50 de l'orifice de la partie sol 18, libérant un éventuel mouvement entre la troisième portion 40 et la partie sol 18. Un jeu mécanique peut être prévu entre la surface interne 50 de l'orifice de la partie sol 18 et la troisième portion 40, si bien que celle-ci peut être essentiellement reliée à la partie sol par l'intermédiaire de l'écrou 32. Les frottements entre la surface interne 50 et la liaison 24 sont réduits, le réglage et la maîtrise de la contrainte de traction de la liaison est plus précis.

La première portion 36 et/ou la deuxième portion 38 comprennent chacune une surface externe avec des motifs. Ces motifs permettent un blocage en rotation autour de l'axe 30, ce qui permet d'exercer un couple sur l'une d'elle, en l'occurrence la deuxième portion 38, tout en retenant la première portion 36 dans la partie vol 16 qui forme une zone d'ancrage. Le couple de torsion axiale est exercé sur la deuxième portion 38 grâce aux moyens de torsion 28, et chemine via la surface externe.

Lors du serrage de la liaison 28, les parties sol 18 et vol 16 du module 12 sont pressées l'une contre l'autre, entre l'écrou 32 et l'épaulement 48. En parallèle, la liaison 24 s'allonge, majoritairement au niveau de la deuxième jonction 44 en raison de son allégement. La liaison 24 devient un ressort, en particulier sa deuxième jonction 44, qui tire les parties (16 ; 18) l'une vers l'autre.

## Revendications

1. Liaison (24) de raccordement hydraulique haute pression pour raccordement de la partie sol (18) et de la partie vol (16) d'un module de raccordement (12) pour l'avitaillement de lanceur, notamment une liaison cryogénique, la liaison (24) comprenant trois portions (36 ; 38 ; 40) et une première jonction (42) en amorce de rupture ;
la liaison (24) comprenant en outre une deuxième jonction (44); les trois portions (36 ; 38 ; 40) présentant une première portion (36), une deuxième portion (38), et une troisième portion (40),
la deuxième portion (38) étant reliée à la première portion (36) et à la troisième portion (40) à l'aide de la première jonction (42) jointe à la première portion (36), et à l'aide de la deuxième jonction (44) jointe à la troisième portion (40), liaison dans laquelle la première jonction (42) est une gorge circulaire et/ou une amorce de rupture, **caractérisée en ce que** la deuxième jonction (44) est au moins dix fois plus longue axialement que la première jonction (42); et **en ce que** la première jonction (42) est d'une longueur axiale inférieure à 10,00 mm.

2. Liaison (24) selon la revendication 1, **caractérisée en ce que** la première portion (36) et/ou la deuxième portion (38) comprend/comprennent une surface externe avec des motifs configurés pour transmettre un couple de torsion axiale à la liaison (24), éventuellement chaque surface externe est hexagonale.

3. Liaison (24) selon l'une des revendications 1 à 2, **caractérisée en ce que** la première jonction (42) est d'une longueur axiale inférieure ou égale à 5,00 mm.

4. Liaison (24) selon l'une des revendications 1 à 3, **caractérisée en ce que** la première jonction (42) comprend au moins un épaulement (48), et/ou la deuxième jonction (44) comprend au moins une zone avec une réduction progressive de diamètre.

5. Liaison (24) selon l'une des revendications 1 à 4, **caractérisée en ce que** la deuxième jonction (44) est au moins vingt fois plus longue axialement que la première jonction (42).

6. Liaison (24) selon l'une des revendications 1 à 5, **caractérisée en ce que** la liaison (24) est formée par une paroi annulaire qui est moins épaisse au niveau de la deuxième jonction (44) qu'au niveau de la première jonction (42).

7. Liaison (24) selon l'une des revendications 1 à 6, **caractérisée en ce que** la troisième portion (40) comprend des moyens de serrage (46), notamment un pas de vis.

8. Liaison (24) selon l'une des revendications 1 à 7, **caractérisée en ce que** la liaison (24) est monobloc et éventuellement venue de matière.

9. Module de raccordement (12) pour l'avitaillement de lanceur, notamment de propulseur de lanceur spatial, le module comprenant :
- une partie vol (16) destinée à être fixée sur le lanceur ;
- une partie sol (18) destinée à être placée à distance du lanceur;
- une liaison (24) qui est jointe aux parties de sorte à les solidariser ;
- un passage traversant la partie sol (18), la partie vol (16), et la liaison (24); et qui est destiné à permettre une communication entre une canalisation du lanceur et une canalisation du pas de tir tel un ombilical;
**caractérisé en ce que**
la liaison (24) est conforme à l'une des revendications 1 à 8.

10. Module de raccordement (12) selon la revendication 9, **caractérisé en ce que** la liaison (24) comprend des moyens de serrage (46) configurés pour plaquer la partie sol (18) et la partie vol (16) l'une contre l'autre et pour contraindre mécaniquement ladite liaison (24).

11. Module de raccordement (12) selon l'une des revendications 9 à 10, **caractérisé en ce que** la contrainte mécanique est une contrainte de traction axiale.

12. Méthode d'assemblage d'un module de raccordement pour l'avitaillement de lanceur, le module comprenant :
- une partie sol (18) du côté du pas de tir du lanceur, la partie sol (18) comprenant un orifice sol ;
- une partie vol (16) solidaire du lanceur, la partie vol (16) comprenant un orifice vol (16) ;
- une liaison (24) qui est jointe aux parties de sorte à les solidariser ;
**caractérisée en ce que**
lors l'assemblage, la liaison (24) est montée avec une précontrainte de traction de sorte à plaquer la partie sol (18) et la partie vol (16) l'une contre l'autre, la liaison (24) étant conforme à l'une des revendications 1 à 8.

13. Méthode d'assemblage selon la revendication 12, **caractérisée en ce que** lors de l'assemblage la liaison (24) est insérée dans l'orifice vol et dans l'orifice sol.

14. Méthode d'assemblage selon l'une des revendications 12 à 13, **caractérisée en ce que** le module comprend des moyens d'étanchéité entre la partie vol (16) et la partie sol (18), lorsque la liaison (24) est soumise à la contrainte, les moyens d'étanchéité sont comprimés, et éventuellement s'écrasent axialement.

15. Méthode d'assemblage selon l'une des revendications 12 à 14, **caractérisée en ce qu'**elle comprend une étape de réglage et/ou une étape de contrôle de la contrainte de traction de la liaison (24).

## Patentansprüche

1. Hochdruckhydraulikanschlussverbindung (24) zur Verbindung des Bodenteils (18) und des Flugteils (16) eines Verbindungsmoduls (12) zum Auftanken einer Trägerrakete, insbesondere eine kryogenen Verbindung, wobei die Verbindung (24) drei Teile (36; 38; 40) und eine erste Verbindungsstelle (42) als Sollbruchstelle umfasst; wobei die Verbindung (24) weiter eine zweite Verbindungsstelle (44) umfasst, wobei die drei Teile (36; 38; 40) einen ersten Teil (36), einen zweiten Teil (38) und einen dritten Teil (40) haben, wobei der zweite Teil (38) mit dem ersten Teil (36) und mit dem dritten Teil (40) mit Hilfe der ersten Verbindungsstelle (42) verbunden ist, die mit dem ersten Teil (36) verbunden ist, und mit Hilfe der zweiten Verbindungsstelle (44), die mit dem dritten Teil (40) verbunden ist, wobei bei der Verbindung die erste Verbindungsstelle (42) eine kreisförmige Ausnehmung und/oder eine Sollbruchstelle ist, **dadurch gekennzeichnet, dass** die zweite Verbindungsstelle (44) axial zumindest zehnmal länger ist als die erste Verbindungsstelle (42) und dass die erste Verbindungsstelle (42) eine axiale Länge von weniger als 10,00 mm hat.

2. Verbindung (24) gemäß Anspruch 1, **dadurch gekennzeichnet, dass** der erste Teil (36) und/oder der zweite Teil (38) eine externe Oberfläche mit Mustern umfasst bzw. umfassen, die dazu konfiguriert sind, ein axiales Drehmoment auf die Verbindung (24) zu übertragen, wobei möglicherweise jede externe Oberfläche hexagonal ist.

3. Verbindung (24) gemäß einem der Ansprüche 1 oder 2, **dadurch gekennzeichnet, dass** die erste Verbindungsstelle (42) eine axiale Länge hat, die kleiner oder gleich 5,00 mm ist.

4. Verbindung (24) gemäß einem der Ansprüche 1 bis 3, **dadurch gekennzeichnet, dass** die erste Verbindungsstelle (42) zumindest eine Formschulter (48) umfasst und/oder dass die zweite Verbindungsstelle (44) zumindest einen Bereich mit einer zunehmenden Verringerung des Durchmessers umfasst.

5. Verbindung (24) gemäß einem der Ansprüche 1 bis 4, **dadurch gekennzeichnet, dass** die zweite Verbindungsstelle (44) axial zumindest zwanzigmal länger ist als die erste Verbindungsstelle (42).

6. Verbindung (24) gemäß einem der Ansprüche 1 bis 5, **dadurch gekennzeichnet, dass** die Verbinung (24) durch eine ringförmige Wand gebildet ist, die an der zweiten Verbindungsstelle (44) weniger dick ist als an der ersten Verbindungstelle (42).

7. Verbindung (24) gemäß einem der Ansprüche 1 bis 6, **dadurch gekennzeichnet, dass** der dritte Teil (40) Fixierungsmittel (46) umfasst, insbesondere ein Schraubengewinde.

8. Verbindung (24) gemäß einem der Ansprüche 1 bis 7, **dadurch gekennzeichnet, dass** die Verbindung (24) einstückig ist und möglicherweise aus einem Material ist.

9. Verbindungsmodul (12) zum Auftanken einer Abschussvorrichtung, insbesondere eines Antriebs einer Raumfahrzeugabschussvorrichtung, wobei das Modul umfasst:
- einen Flugteil (16), der dazu bestimmt ist, auf der Abschussvorrichtung befestigt zu sein;
- einen Bodenteil (18), der dazu bestimmt ist, beabstandet von der Abschussvorrichtung platziert zu sein;
- eine Verbindung (24), die an den Teilen befestigt ist, um sie miteinander zu verbinden;
- einen Durchgang, der den Bodenteil (18), den Flugteil (16) und die Verbindung (24) durchquert und der dazu bestimmt ist, eine Kommunikation zu erlauben zwischen einem Kanal der Abschussvorrichtung und einem Kanal der Startvorrichtung wie einer Versorgungsleitung;
**dadurch gekennzeichnet, dass** die Verbindung (24) gemäß einem der Ansprüche 1 bis 8 ist.

10. Verbindungsmodul (12) gemäß Anspruch 9, **dadurch gekennzeichnet, dass** die Verbindung (24) Fixierungsmittel (46) umfasst, die dazu konfiguriert sind, um den Bodenteil (18) und den Flugteil (16) aneinander zu drücken und um mechanisch die besagte Verbindung (24) zu erzwingen.

11. Verbindungsmodul (12) gemäß einem der Ansprüche 9 bis 10, **dadurch gekennzeichnet, dass** der mechanische Zwang eine axiale Zugspannung ist.

12. Montageverfahren eines Verbindungsmoduls zum Auftanken einer Abschussvorrichtung, wobei das Modul umfasst:
- einen Bodenteil (18) auf der Seite der Startvorrichtung der Abschussvorrichtung, wobei der Bodenteil (18) eine Bodenöffnung aufweist;
- einen Flugteil (16), der mit der Abschussvorrichtung verbunden ist, wobei der Flugteil (16) eine Flugöffnung (16) umfasst;
- eine Verbindung (24), die an den Teilen befestigt ist, um sie miteinander zu verbinden;
**dadurch gekennzeichnet, dass** bei der Montage die Verbindung (24) mit einer voraufgeprägten Zugspannung montiert wird, um den Bodenteil (16) und den Flugteil (16) aneinander zu drücken, wobei die Verbindung (24) gemäß einem der Ansprüche 1 bis 8 ist.

13. Montageverfahren gemäß Anspruch 12, **dadurch gekennzeichnet, dass** bei der Montage die Verbindung (24) in die Flugöffnung und in die Bodenöffnung eingeführt wird.

14. Montageverfahren gemäß einem der Ansprüche 12 bis 13, **dadurch gekennzeichnet, dass** das Modul Dichtmittel zwischen dem Flugteil (16) und dem Bodenteil (18) umfasst, und dass, wenn die Verbindung (24) einer Spannung ausgesetzt wird, die Dichtmittel komprimiert werden und sich möglicherweise axial aneinander quetschen.

15. Montageverfahren gemäß einem der Ansprüche 12 bis 14, **dadurch gekennzeichnet, dass** es einen Schritt der Einstellung und/oder einen Schritt der Kontrolle der Zugspannung der Verbindung (24) umfasst.

## Claims

1. High-pressure connecting link (24) for the connection of the ground portion (18) to the flight portion (16) of a connection module (12) for fuelling a launch vehicle, in particular a cryogenic link, the link (24) comprising three portions (36; 38; 40) and a first joint (42) forming a predetermined breaking point;
the link (24) further comprising a second joint (44);
the three portions (36; 38; 40) comprising a first portion (36), a second portion (38), and a third portion (40),
the second portion (38) being linked to the first portion (36) and to the third portion (40) through the first joint (42) jointed to the first section (36), and through the second joint (44) jointed to the third portion (40),
wherein the first joint (42) is a circular groove and/or a predetermined breaking point, **characterized in that** the second joint (44) is at least ten times longer axially than the first joint (42); and **in that** the first joint (42) has an axial length of less than 10,00 mm.

2. Link (24) according to claim 1, **characterized in that** the first portion (36) and/or the second portion (38) comprise(s) an external wall with configured patterns to transmit an axial twisting torque to the link (24), potentially each external wall is hexagonal.

3. Link (24) according to one of claims 1 to 2, **characterized in that** the first joint (42) has an axial length that is less than or equal to 5,00 mm.

4. Link (24) according to claim 1 to 3, **characterized in that** the first joint (42) comprises at least one shoulder (48) and/or the second joint (44) comprises at least one area wherein the diameter progressively reduces.

5. Link (24) according to one of claims 1 to 4, **characterized in that** the second joint (44) is at least twenty times longer axially than the first joint (42).

6. Link (24) according to one of claims 1 to 5, **characterized in that** the link (24) is formed by an annular wall which is less thick at the second joint (44) than at the first joint (42).

7. Link (24) according to one of claims 1 to 6, **characterized in that** the third portion (40) comprises clamping devices (46), preferably a screw thread.

8. Link (24) according to one of claims 1 to 7, **characterized in that** the link (24) is monobloc and potentially integrally made.

9. Connection module (12) for fuelling a launch vehicle, preferably a booster of spatial launch vehicle, the module comprising:
- a flight portion (16) intended to be placed on the launcher;
- a ground portion (18) intended to be placed away from the launcher;
- a link (24) which is attached to the portions in such a manner as to unite them;
- an opening through the ground portion (18), the flight portion (16), and the link (24); and which permits a communication between a conduit of the launcher and a conduit of the launching pad like an umbilical;
**characterized in that**
the link (24) is in accordance with one of the claims 1 to 8.

10. Connection module (12) according to one of claims 9, **characterized in that** the link (24) comprises a clamping device (46) designed to maintain the ground portion (18) and the flight portion (16) one against the other and to mechanically pre-stress said link (24).

11. Connection module (12) according to claim 9 to 10, **characterized in that** the mechanical stress is an axial tensile stress.

12. Assembling method of a connection module (12) for fuelling a launch vehicle, said module comprising:
- a ground portion (18) on the side of the launching pad of the launch vehicle, the ground portion (18) comprising a ground opening;
- a flight portion (16) fixed to the launch vehicle, the flight portion (16) comprising a flight opening;
- a link (24) which is attached to the portions in such a manner as to unite them;
**characterized in that**
during assembling, the link (24) is mounted in a tensile pre-stressed state in order to maintain the ground portion (18) and the flight portion (16) one against the other, the link (24) being in accordance with one of the claims 1 to 8.

13. Assembling method according to claim 12, **characterized in that** during assembling, the link (24) is inserted in the ground opening and in the flight opening.

14. Assembling method according to claim 12 to 13, **characterized in that** the module comprises sealing means between the flight portion (16) and the ground portion (18), and once the link (24) is stressed, the sealing means are compressed, and they potentially flatten axially.

15. Assembling method according to claim 12 to 14, **characterized in that** it comprises one adjustment step and/or control step of the tensile stress of the link (24).
